Europäisches Patentamt

European Patent Office

Office européen des brevets

Publication number: **0 276 350**
**A1**

# EUROPEAN PATENT APPLICATION

Application number: 87101206.8

Int. Cl.⁴ **C25B 9/00**

Date of filing: **29.01.87**

Date of publication of application:
**03.08.88 Bulletin 88/31**

Designated Contracting States:
**BE DE FR GB IT NL**

Applicant: **THE DOW CHEMICAL COMPANY**
**2030 Dow Center Abbott Road P.O. Box 1967**
**Midland, MI 48640(US)**

Inventor: **Morris, Gregory J.E.**
**123 Sequoia**
**Lake Jackson Texas 77566(US)**
Inventor: **Grosshandler, Sandor**
**12507 Briar Forest Drive**
**Houston Texas 77077(US)**

Representative: **Huber, Bernhard, Dipl.-Chem.**
**et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

## Combination seal and tentering means for electrolysis cells.

A combination seal and tentering means for an electrolysis cell comprising a substantially solid member interposed between at least one side of a separator of the cell and at least one electrode frame member of the cell. The substantially solid member has a first generally planar surface (11a) in contact with one side of the separator (30) of the cell and a second uneven surface (11b) in contact with the electrode frame (43) of the cell and a periphery defining a shoulder portion (11c) having an inside in contact with the outside surface of the electrode frame member.

**FIG.1**

## COMBINATION SEAL AND TENTERING MEANS FOR ELECTROLYSIS CELLS

This invention relates to a combination seal and tentering means for an electrolysis cell.

Membrane-type electrolysis cells, i.e., electrolysis cells employing membranes interposed between a pair of adjacent electrode frames, typically use a separate and independent seal means, for example, a gasket, interposed between the membrane and an electrode frame member to provide a gas and electrolyte tight seal for the cell.

In addition to a seal means, membrane type electrolysis cells typically use a separate and independent tentering device to planarly dispose the membrane between at least two flat surface, parallel flanges of opposing anodes and cathodes. There are several problems associated with a nonplanar membrane, or a wrinkled membrane, installed between electrode frames of an electrolysis cell during operation of the cell. For example, a wrinkled membrane can reduce the circulation of electrolyte or can trap gas bubbles between the electrode and the membrane face, resulting in a nonuniform increase of the resistivity of the electrolyte solution in the interelectrode space with the nonuniform current distribution in the vertical direction. This leads to an increase in current consumption and relatively higher costs in operating a cell. This can also cause leaks in the membrane which can damage the external structure of the cell and loss of cell efficiency.

The method of tentering the membranes and sealing the membrane-type cells becomes increasingly important in flat plate-type or filter press-type electrolysis cells where several repeating units of membranes and electrode frames are used. Conventional methods for tentering the membrane and sealing the cell have included using a separate gasket and tentering device. One method of tentering the membrane involves holding the membrane by hand between cell frames and stretching the membrane as the cell frames are compressed together. The cell gaskets in this instance are glued to one of the electrode frames. In another method, the cell frames, membranes and gaskets are assembled in the horizontal position to ensure a planar placement of the membrane and gaskets, and thereafter standing the assembled cell in the upright position for operation. Still, in another method, the membrane and gasket are glued to the cathode or anode frame prior to assembling the elements of the cell together.

The above approaches are unsatisfactory as they present time consuming, complex procedures, costly equipment and safety hazards to personnel. It is therefore desired to provide a means suitable for sealing an electrolysis cell and tentering an electrolysis separator to reduce the complexity of assembling the elements of an electrolysis cell.

In one aspect, the present invention resides in a combination seal and tentering means for an electrolysis cell comprising a substantially solid member having a first generally planar surface adapted to contact one side of a separator of the cell, a second uneven surface adapted to contact at least one electrode frame member of the cell, and a periphery defining a shoulder portion having an inside surface adapted to contact the outside surface of at least one electrode frame member of the cell, said solid member providing a fluid-tight seal and tentering the separator between at least two adjacent electrode frame members.

In another aspect the present invention resides in a combination seal and tentering assembly for an electrolysis cell comprising, (a) a first seal-tentering means adapted to contact one side of a separator and at least one electrode frame member of the cell, said first seal and tentering means comprising a substantially solid member having a first generally planar surface adapted to contact the separator, a second uneven surface adapted to contact at least one electrode frame member and a periphery defining a shoulder portion having an inside surface adapted to contact the outside surface of at least one electrode frame member, (b) a second seal-tentering means adapted to contact the other side of the separator and the other electrode frame member of the cell, said second seal-tentering means comprising a substantially solid member having a first generally planar surface adapted to contact the separator, a second uneven surface adapted to contact at least the other electrode frame member and a periphery defining a shoulder portion having an inside surface adapted to contact the outside surface of at least the other electrode frame member, and, (c) a fastener means adapted to secure the first and second seal-tentering means together.

Still another aspect of the present invention is an electrolysis cell assembly including the combination seal and tentering means above.

Yet another aspect of the present invention is a method of sealing and tentering in an electrolysis cell using the combination seal and tentering means above.

The invention can be better understood by reference to the drawings illustrating the preferred embodiments of the inventon. The same numerical designation is used in all the Figures where identical elements are shown.

Figure 1 is a partially cut away, partially exploded, perspective view of a corner portion of an electrolysis cell assembly showing adjacent filter press-type cell frames, a membrane and a combination seal and tentering means according to the present invention.

Figure 2 is a cross-sectional view of the portion of an electrolysis cell assembly of Figure 1 showing a combination seal and tentering means positioned between two adjacent cell frames.

Figure 3 is a cross-sectional view of another embodiment of the present invention showing a portion of an electrolysis cell assembly with a combination seal and tentering means.

Figure 4 is a cross-sectional view of another embodiment of the present invention showing a portion of an electrolysis cell assembly with a combinaton seal and tentering means.

Figure 5 is a cross-sectional view of another embodiment of the present invention showing a portion of an electrolysis cell assembly with a combination seal and tentering means.

Figure 6 is a cross-sectional view of another embodiment of the present invention showing an electrolysis cell assembly with a combination seal and tentering means.

Figure 7 is another embodiment of the present invention and illustrates a partially cut away, partially exploded, perspective view of a corner portion of an electrolysis cell assembly showing adjacent filter press-type cell frames, a membrane and a combinaton seal and tentering means according to the present invention.

Figure 8 is a cross-sectional view of the portion of an electrolysis cell assembly of Figure 7 showing a combination seal and tentering means positioned between two adjacent cell frames.

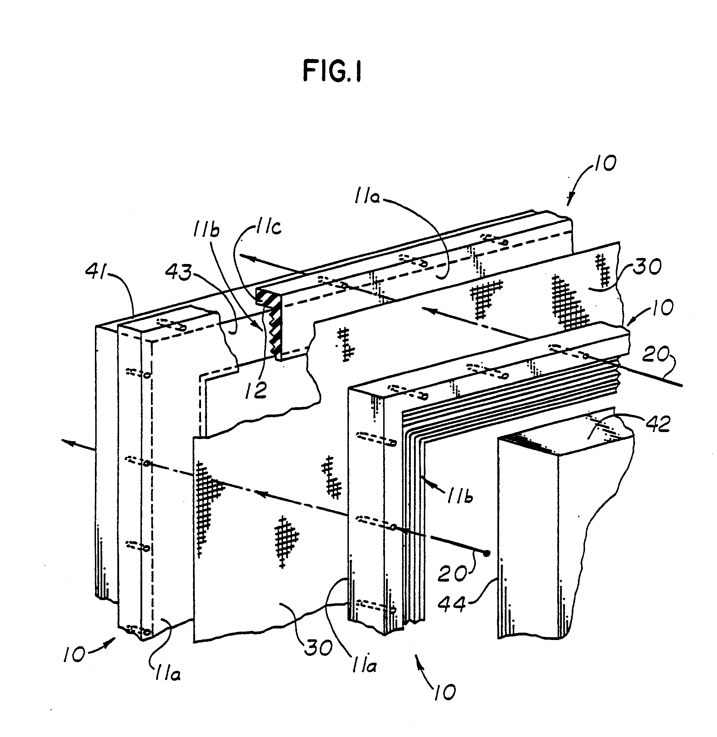

The seal and tentering means, shown in Figures 1-8, includes a pair of combination seal and tentering means generally indicated by numeral 10, and a fastener such as, for example, a pin 20. The seal and tentering means is used in an electrolysis cell, for example, chlor-alkali cells used for the production of chlorine and an alkali metal hydroxide employing a separator 30. Suitably used are electrolysis cells of the flat plate-type or filter press-type. More preferably, the present invention will be described herein with reference to filter press-type electrolysis cells which may be monopolar or bipolar. Filter press-type cells are described, for example, in U. S. Patent Nos. 4,108,742 and 4,111,779.

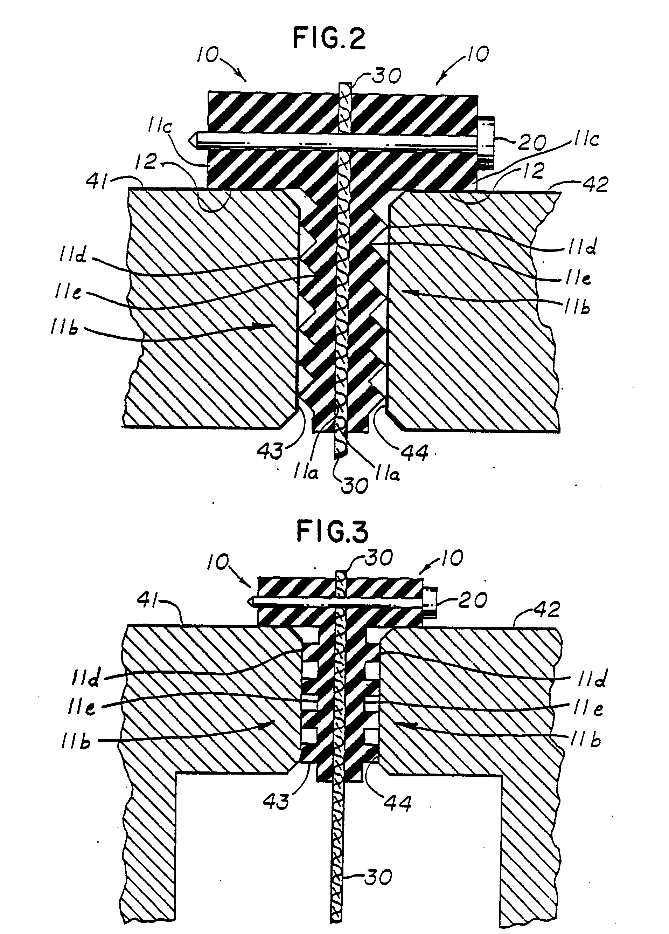

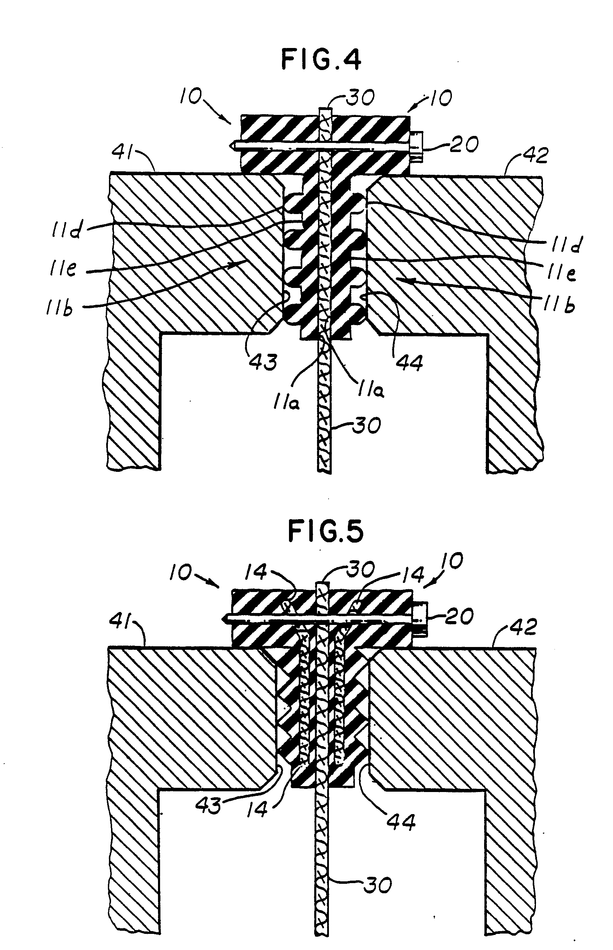

With particular reference to Figures 1 and 2, there is shown a pair of seal-tentering means 10 interposed between two electrode frame members 41 and 42 with a separator 30 interposed between the pair of seal-tentering means 10. A fastener 20 secures the pair of seal-tentering means 10 and separator 30. Alternate embodiments of the seal-tentering means 10 are shown in Figures 3-8, inclusive. The seal-tentering means 10 includes a substantially solid body with a first generally planar surface 11a adapted to contact the separator 30, a second uneven surface 11b adapted to contact one electrode frame member at the lateral face 43 or 44 and a periphery defining a shoulder portion 11c having an inside surface in contact with the outside surface of an electrode frame member forming an interface 12.

A "substantially solid body" means the body may be porous or contain other materials embedded therein. In the present invention, the uneven surface 11b may be in the form of a series of ridges 11d and grooves 11e running parallel to each other. Figure 2 shows the ridges 11d and grooves 11e to be generally triangular in cross-section, although any cross-sectional shape may be used. For example, the ridges 11d and grooves 11e may be of generally rectangular cross-section or of generally semi-circular cross-section as shown in Figures 3 and 4, respectively. Various other shapes of the ridges 11d and grooves 11e may be used if desired.

The seal-tentering means 10 may be gaskets of various materials, the selection of which depends on the application of use. For example, the gaskets may be of rubber or elastomeric materials when used in chlor-alkali cells. The gaskets should be made of a material which is physically and chemically stable when in contact with the electrolyte and the products of electrolysis present in a chlor-alkali cell. In the production of chlorine and caustic, for example, the gaskets must, of course, be substantially inert to acid, brine, chlorine, hydrogen and caustic. In addition, the gaskets are preferably, electrically nonconductive. Furthermore, the gasket should be of a material having high volume resistivity and good sealability after it has been compressed. Suitably materials which can be employed in accordance with this invention include, but are not limited to, for example, Neoprene, butyl rubber, ethylene propylene diene (EPDM), chlorinated polyethylene (CPE) and a polytetrafluoroethylene (PTFE) material such as Teflon®, a Trademark of E. I. duPont de Nemours and Company. The durameter of these materials may range from 40 to 80 Shore A.

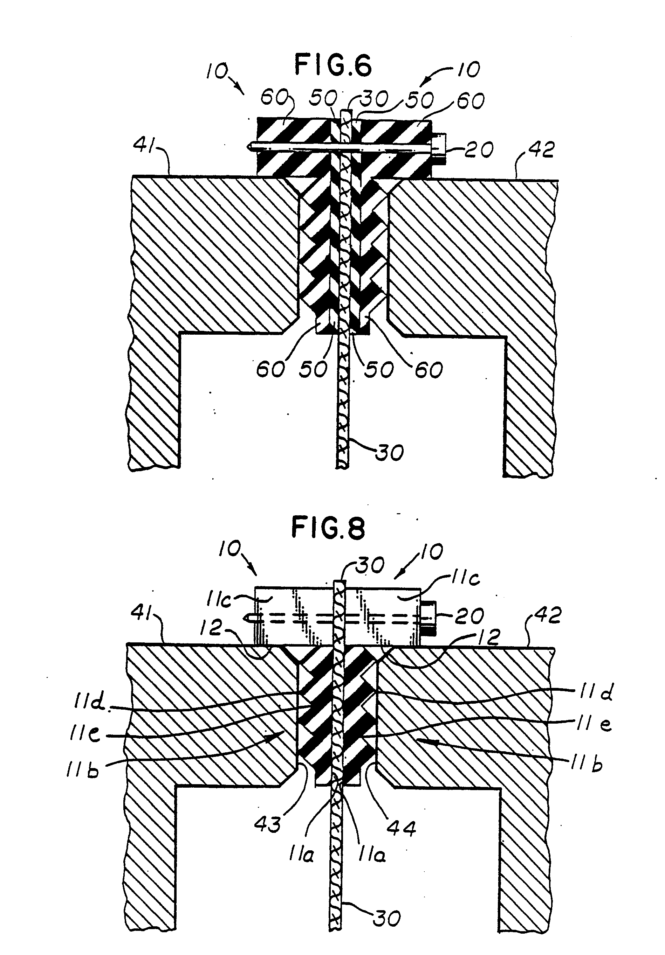

Figure 5 shows another and preferred embodiment of the present invention wherein the sealtentering means 10 includes a reinforcement or rigidifying material 14 embedded in the solid body. Although not shown, the rigidifying material may be used with the seal-tentering means 10 of any of the Figures 1-8, if desired. The purpose of the rigidifying material is to minimize local compression and stiffen quadralaterally the seal-tentering means against stretch. The rigidifying material may be made of any material inert to the materials used for the seal-tentering means above, for example, the rigidifying material may be an aromatic polyamide fiber, such as Kevlar® a Trademark of E. I. duPont de Nemours & Company, polyester, nylon or fabric. The rigidifying material may also be a screen of a metal such as, for example, titanium. The rigidifying material, viewed in cross-section, may be any shape or form. Preferably, a fabric material is embedded within the solid body of the seal-tentering mean 10.

Included within the scope of the present invention is a seal-tentering means 10 having a multilayer construction. As illustrated in Figure 6, the seal-tentering means 10 may be constructed of a bi-layer structure. For example, a first layer 50 and a second layer 60 may be made of different or similar materials and may be of different or similar hardness. For example, the first layer 50 may be made of CPE with a hardness of 40 shore A and the second layer may be made of EPDM with a hardness of 80 shore A.

Referring again. to Figures 1 and 2, there is shown a filter press-type electrolysis cell assembly including a separator 30 and two seal-tentering means 10 positioned between a pair of filter press-type electrode frame members 41, and 42. For illustrative purposes, frame 41 will be referred hereto as the anode frame 41 and frame 42 will be referred to as the cathode frame 42. The separator 30 is interposed between the two seal-tentering means 10 while the two seal-tentering means 10 including the separator 30 are interposed between the lateral faces 43 and 44 of frames 41 and 42 respectively. The uneven surface 11b of the seal-tentering means is in contact with the lateral face 43 and 44 of electrode frames 41 and 42, respectively, and the generally planar surface 11a of the seal-tentering means is in contact with the separator 30. The uneven surface 11b of each of the pair of seal-tentering means 10 essentially face opposite each other with the separator 30 interposed between the generally planar surfaces 11a of the seal-tentering means 10. The shoulder portion 11c of the seal-tentering means 10 is in contact with the outer surface of frames 41 and 42 to form interface 12.

A fastener means 20 such as a pin, bolt, cam, clip, tape or clamp is used to secure the two seal-tentering means and the membrane 30 together. In this embodiment a pin 20 is used.

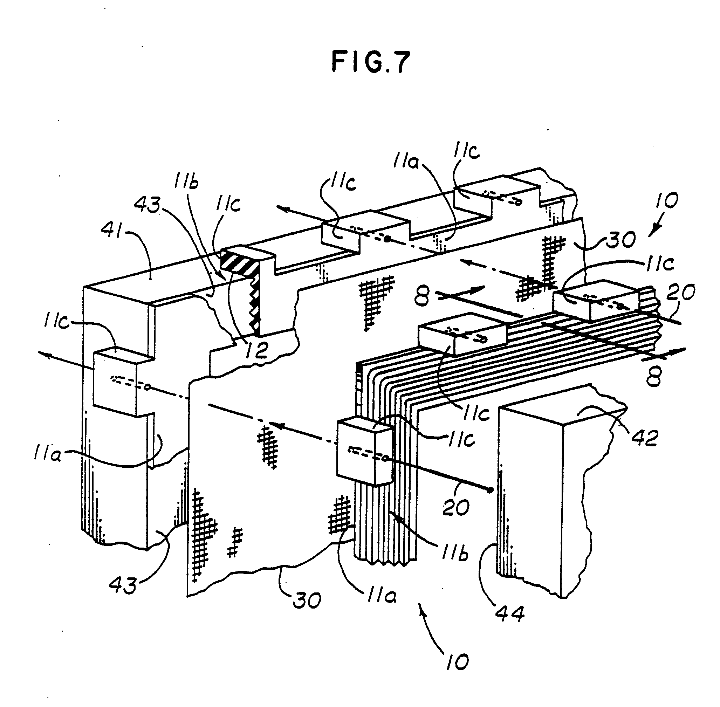

Figures 7 and 8 show another embodiment of the present invention wherein the periphery defining the shoulder portion 11c of the seal-tentering means 10 is intermittently spaced apart and peripherally integral with the solid body of the seal-tentering means 10 providing the sealing aspect of the seal-tentering means contacting the frame members.

The separator 30 of the present invention may be a diaphragm or a membrane. The instant invention is particularly applicable to ion-exchange membrane separators used in filter press-type cells. Preferably, inert, flexible separators having ion exchange properties and which are substantially impervious to the hydrodynamic flow of the electrolyte and the passage of gas products produced during electrolysis are used.

The frames 41 and 42 are made of typical construction materials for electrolytic cells which are resistant to corrosion by the electrolytes and the products of electrolysis. The frames 41 and 42 may be any shape used in typical electrolysis cells, such as, for example. rectangular bars, C or U channels, cylindrical tubes, elliptical tubes as well as being I-shaped or H-shaped. Preferably, the cross-section shape of the frame members are I-shaped.

In order to effectuate a fluid-tight, i.e. a gas and liquid-tight, seal between the adjacent frame members 41 and 42, a pair of the seal-tentering means 10 are interposed between the cell frames 41 and 42 so that the ridges 11d bear against the lateral faces 43 and 44 of frames 41 and 42, respectively, at the points of contact. The membrane 30 is interposed between the solid bodies of the seal-tentering means 10 such that the opposite sides of the membrane 30 are in contact with the flat or planar surfaces 11a of the seal-tentering means 10. A compressive force, for example, using a hydraulic ram, is applied to the cell frames to compress the seal portion of the seal-tentering means with the membrane together. Upon compression, the ridges 11d deform slightly which is not shown in any one of the Figures. The nominal compressive stress normally used to compress the seal-tentering means may range from 345 to 13800 kPa. Preferably, from 345 to 4100 kPa and, more preferably, from 345 to 1400 kPa. However, the lowest stress for effectuating a desired joint tightness is desirable for material endurance.

One advantage of the present seal-tentering assembly over conventional sealing means is that an interfacial seal may be obtained at a lower nominal compressive stress with seal-tentering means having an uneven surface than with seal means with flat surfaces. It is found that using the seal-tentering means of the present invention. there is less compressive stress on the membrane as long as the ridges of the seal-tentering means are not completely compressed. In addition it is found that the intrinsic oozing-out of the gasketing material is significantly reduced. Such features may enhance the expected service life of the membrane.

## Claims

1. A combination seal and tentering means for an electrolysis cell comprising a substantially solid member having a first generally planar surface adapted to contact one side of a separator of the cell, a second uneven surface adapted to contact at least one electrode frame member of the cell, and a periphery defining a shoulder portion having an inside surface adapted to contact the outside surface of at least one electrode frame member of the cell, said solid member providing a fluid-tight seal and tentering the separator between at least two adjacent electrode frame members.

2. The seal-tentering means of Claim 1 wherein the second uneven surface is a series of ridges of generally triangular, rectangular or semi-circular cross-section.

3. The seal-tentering means of Claim 1 or 2 including rigidifying material embedded in said solid member, said rigidifying material comprising a synthetic resinous material, a metal sheet or screen, or a fabric material.

4. The seal-tentering means of Claim 3, wherein said rigidifying material is made of ethylenepropylene diene monomer or chlorinated polyethylene.

5. A combination seal and tentering assembly for an electrolysis cell comprising

(a) a first seal-tentering means adapted to contact one side of a separator and at least one electrode frame member of the cell, said first seal and tentering means comprising a substantially solid member having a first generally planar surface adapted to contact the separator, a second uneven surface adapted to contact at least one electrode frame member and a periphery defining a shoulder portion having an inside surface adapted to contact the outside surface of at least one electrode frame member,

(b) a second seal-tentering means adapted to contact the other side of the separator and the other electrode frame member of the cell, said second seal-tentering means comprising a substantially solid member having a first generally planar surface adapted to contact the separator, a second uneven surface adapted to contact at least the other electrode frame member and a periphery defining a shoulder portion having an inside surface adapted to contact the outside surface of at least the other electrode frame member, and

(c) a fastener means adapted to secure the first and second seal-tentering means together.

6. An electrolysis cell assembly comprising; an anode frame, a cathode frame, a separator interposed between the anode and cathode frame, a first seal-tentering means interposed between one side of the separator and the anode frame, said first seal-tentering means comprising a substantially solid member having a first generally planar surface in contact with the separator, a second uneven surface in contact with the anode frame and a periphery defining a shoulder portion having an inside surface in contact with the outside surface of the anode frame, said solid member providing a fluid-tight seal and tentering the separator between at least two adjacent electrode frame members, a second seal-tentering means interposed between the other side of the separator and the cathode frame, said second seal-tentering means comprising a substantially solid member having a first generally planar surface in contact with the separator, a second uneven surface in contact with the cathode frame, and a periphery defining a shoulder portion having an inside surface in contact with the outside surface of the cathode frame, said solid member providing a fluid-tight seal and tentering the separator between at least two adjacent electrode frame members.

7. The cell assembly of Claim 6 wherein the separator is a membrane, and including a fastener means adapted to secure the first and the second seal-tentering means and the separator together.

8. A method for sealing an electrolysis cell in combination with tentering the separator of said cell comprising the steps of

(a) interposing a separator between an anode and a cathode frame of an electrolysis cell,

(b) interposing a first seal-tentering means between one side of the separator and the anode frame, said first seal-tentering means comprising a substantially solid member having a first generally planar surface in contact with the separator, a second uneven surface in contact with the anode frame and a periphery defining a shoulder portion having an inside surface in contact with the outside surface of the anode frame, said solid member providing a fluid-tight seal and tentering the separator between at least two adjacent electrode frame members,

(c) interposing a second seal-tentering means between the other side of the separator and the cathode frame, said second seal-tentering means comprising a substantially solid member having a first generally planar surface in contact with the separator, and a second uneven surface in contact with the cathode frame and a periphery defining a shoulder portion having an inside surface in contact with the outside surface of the anode frame, said solid member providing a fluid-tight seal and tentering the separator between at least two adjacent electrode frame members, and

(d) applying a compressive force to the frames.

9. The method of Claim 8 including the step of securing the first and the second seal-tentering means and the membrane together with a plurality of fastening means.

# FIG.I

## FIG.2

## FIG.3

# FIG.4

# FIG.5

0 276 350

FIG.6

FIG.8

# FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | PATENT ABSTRACTS OF JAPAN, vol. 10, no. 219 (C-363)[2275], 31st July 1986; & JP-A-61 56 290 (SHOWA DENKO K.K.) 20-03-1986 | | C 25 B 9/00 |
| A | PATENT ABSTRACTS OF JAPAN, vol. 3, no. 59 (C-46), 19th May 1979, page 102 C 46; & JP-A-54 33 897 (TOKUYAMA SODA K.K.) 12-03-1979 | | |
| A | EP-A-0 051 380 (OLIN CORP.) | | |

TECHNICAL FIELDS
SEARCHED (Int. Cl. 4)

C 25 B 9
C 25 B 13
H 01 M 8

The present search report has been drawn up for all claims

| Place of search | Date of completion of the search | Examiner |
|---|---|---|
| THE HAGUE | 21-09-1987 | GROSEILLER PH.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82